# EUROPÄISCHE PATENTSCHRIFT

(11) **EP 2 594 813 B1**
(45) Veröffentlichungstag und Bekanntmachung des Hinweises auf die Patenterteilung: **17.06.2015**
(21) Anmeldenummer: 11009212.9
(22) Anmeldetag: 21.11.2011
(51) Int. Cl.: F16B 37/06

(54) **Blindnietelement**
Blind rivet element
Elément de rivet aveugle

(43) Veröffentlichungstag der Anmeldung: 22.05.2013
(73) Patentinhaber: Dregischan, Simone, 65347 Eltville (DE); Vetter, Alexandra, 65719 Hofheim am Taunus (DE)
(72) Erfinder: Schruff, Herbert, 65375 Oestrich-Winkel (DE)
(74) Vertreter: Quermann, Helmut

(56) Entgegenhaltungen:
- EP-A1- 1 918 596
- US-A- 3 789 728
- US-B1- 6 538 894

## Beschreibung

Die Erfindung betrifft ein Blindnietelement mit einem Setzkopf und einem Schaft, wobei der Schaft im Bereich seines dem Setzkopf abgewandten Endes ein Innengewinde oder eine Aufnahme für einen Gewindebolzen und zwischen dem Innengewinde bzw. der Aufnahme für den Gewindebolzen und dem Setzkopf einen Verformungsabschnitt aufweist, sowie der Setzkopf einen größeren Außendurchmesser als der Schaft aufweist, wobei der Verformungsabschnitt, nach dem Verformen des Schafts und hierbei ausgebildetem Schließkopf, einen Wulst aufweist, der sich in Umfangsrichtung des Schafts an dessen Außenseite erstreckt.

Derartige Blindnietelemente sind beispielsweise als Blindnietmutter oder Blindnietgewindebolzen ausgebildet.

In der EP 1 918 596 ist ein Blindnietelement der eingangs genannten Art beschrieben.

Blindnietelemente haben sich für Befestigungsaufgaben bewährt, bei denen eine Schraubverbindung im Bereich dünnwandiger Materialien, beispielsweise Blechen, erforderlich ist, in die normalerweise kein belastbares Gewinde geschnitten werden kann. Blindnietelemente bilden den Gegenflansch - Schließkopf - durch Wulstbildung, also eine Materialfalte. Je geringer die Materialstärke eines dünnwandigen Gegenstandes, insbesondere Bleches ist, mit dem das Blindnietelement definierter Abmessung zu verbinden ist, desto größer ist der Außendurchmesser des Wulstes. Die radiale Erstreckung des Wulstes ist aber in jedem Fall relativ gering, bezogen auf den Außendurchmesser des Schafts des Blindnietelements.

In der DE 198 08 685 A1 ist gleichfalls ein Blindnietelement der eingangs genannten Art beschrieben, das als Blindnietmutter ausgebildet ist. Bei diesem ist der Bereich im Verformungsabschnitt, wo der Schließkopf beginnt sich zu formen, nicht definiert, sondern insbesondere abhängig von der Montageanordnung. Beim Setzen der Blindnietmutter bildet sich im Bereich des Verformungsabschnitts ein umlaufender Wulst, der somit in Umfangsrichtung des Schaftes geschlossen ist und sich infolgedessen über einen Vollkreis erstreckt. Zwischen diesem umlaufenden Wulst und dem Setzkopf ist der dünnwandige Gegenstand, insbesondere das Blech fixiert.

Um eine definierte Ausbildung des umlaufenden Wulstes zu erzielen, ist gemäß der EP 1 918 596 A1 vorgesehen, dass der Schaft in einem zentralen Umfangsbereich des Verformungsabschnitts eine Schwächung der Schaftwandung aufweist. Diese Schwächung wird insbesondere mittels mehrerer Löcher im Schaft erzielt. Aufgrund der Schwächung der Schaftwandung bildet sich nach dem Verformen des Blindnietelements definiert ein Schließkopf in Form eines umlaufenden Wulstes aus.

Eine andere Gattung von Blindnietelementen ist in der US-A-3,789,728 beschrieben. Dort ist der Schaft des als Blindnietmutter ausgebildeten Blindnietelements mit mehreren parallel zur Längsmittelachse des Schaftes angeordneten Durchgangsschlitzen versehen. Beim Setzen des Blindnietelements entsteht infolgedessen kein wulstartiger Schließkopf, sondern es werden Rosetten ausgebogen, die eine gegenüber einem Wulst recht große radiale Erstreckung aufweisen. Zwischen jeweils benachbarten Rosetten ist ein keilförmiger Zwischenraum gebildet. Aufgrund der großen Radialerstreckung der verformten Abschnitte der Blindnietmutter befindet sich deren radial äußere Auflage am Blech sehr weit von der Längsmittelachse des Schaftes entfernt.

Die beschriebenen Blindnietelemente können nur dann mit dünnwandigen Gegenständen, insbesondere Blechen verbunden werden, wenn beim Setzen des Blindnietelements hinter dem dünnwandigen Element ausreichend Platz ist, damit sich das Blindnietelement im Bereich seines Verformungsabschnitts radial nach außen verformen kann. Dies gilt erst recht für die Ausbildung des Blindnietelements, bei dem sich beim Setzen die Rosetten bilden.

Aufgabe der Erfindung ist es, ein Blindnietelement zu schaffen, bei dem grundsätzlich eine Ausbildung des Schließkopfes mit einem sich über einen Vollkreis erstreckenden Wulst nicht erforderlich ist, oder, bei dem eine Ausbildung des Schließkopfes mit dem sich über einen Vollkreis erstreckenden Wulst nicht gewünscht ist, weil dieser mit einem anderen Gegenstand kollidieren würde.

Zur Lösung dieser Aufgabe wird ein Blindnietelement gemäß den Merkmalen des Patentanspruchs 1 vorgeschlagen.

Das erfindungsgemäße Blindnietelement findet somit bei zwei grundsätzlichen Einsatzgebieten Verwendung: Im einem Fall könnte ein herkömmliches Blindnietelement nicht eingesetzt werden, weil bei dessen Setzen sich ein umlaufender Wulst ergibt, der sich aber nicht ausbilden kann, weil im Ausdehnungsweg des Schaftes beim Setzen des Blindnietelements ein Gegenstand vorhanden ist. In diesem Fall kann das Blindnietelement nur dann gesetzt werden, wenn so gestaltet ist, dass es sich in Richtung des unmittelbar neben dem Blindnietelement befindlichen Gegenstandes nicht verformt. - Im anderen Fall wäre zwar grundsätzlich ausreichend Platz für eine umlaufende Ausbildung des Wulstes beim Setzen des Blindnietelements vorhanden. Aus bestimmten Gründen soll dieser Platz aber nicht vollständig belegt werden, sodass es ausreicht, beim Setzen des Blindnietelements einen Wulst auszubilden, der sich nur über einen Teilkreis erstreckt. Im verbleibenden Teilkreis bildet sich somit kein Wuls aus. Eine solche Wulstausbildung bei einem Blindnietelement kann beispielsweise von Vorteil sein, wenn das Blindnietelement mit Kräften beaufschlagt wird, die einen erheblichen Radialanteil aufweisen. Hierbei kommt es nicht ent scheidend darauf an, dass über einen umlaufenden Wulst eine maximale Klemmfläche zwischen Wulst und Setzkopf geschaffen wird.

Bei dem erfindungsgemäßen Blindnietelement ist der Schaft somit derart gestaltet, dass in dem Bereich des Schaftes, in dem die Wulstbildung nicht erfolgen soll, die Bildung des Wulstes durch Entnahme von Material des Schaftes verhindert wird.

Die Entnahme des Materials vom Schaft kann auf unterschiedlichste Art und Weise erfolgen und es kann unterschiedlich viel Material vom Schaft entnommen werden, sofern gewährleistet ist, dass sich in dem interessierenden Bereich des Schaftes der Wulst nicht ausbildet.

Bei der Herstellung des Blindnietelements kann im interessierenden Bereich Material vom Schaft dadurch entnommen werden, dass beispielsweise beim Pressen eines Rohlings des Blindnietelements ein Loch oder eine Ausnehmung in den Schaft eingebracht wird. Andererseits kann bei dem Herstellen des Blindnietelements das Material im interessierenden Bereich vom Schaft entfernt werden, beispielsweise durch mechanisches Bearbeiten. Oftmals wird ein Entfernen von Material im interessierenden Bereich des Schaftes, wobei die Entfernung des Materials nicht dazu führt, dass ein Durchgangsloch im Schaft gebildet ist, den erfindungsgemäßen Zweck verwirklichen. Bereits durch diese Maßnahme kann sichergestellt sein, dass der Schaft in diesem Bereich über so wenig Material verfügt, dass sich beim Setzen des Blindnietelements in diesem Bereich kein Wulst ausbilden kann. Als bevorzugt wird es angesehen, weil dies die einfachste Art darstellt, die Bildung des Wulstes durch Entnahme von Material des Schaftes zu verhindern, indem der Schaft ein Loch aufweist, insbesondere ein Loch, das vor dem Setzen des Blindnietelements Kreisquerschnitt aufweist. Wie beschrieben, wird durch dieses Loch, insbesondere das Loch, das vor dem Setzen des Blindnietelements Kreisquerschnitt aufweist, erreicht, dass nicht ausreichend Material zur Verfügung steht, welches beim Setzen des Blindnietelements zur Bildung eines Wulstes beitragen könnte. Demnach ist in diesem Bereich des Schafts kein Wulst ausgebildet.

Durch die Materialentnahme im Bereich des Schafts, somit die Reduzierung der Wandstärke der Schaftwandung gegenüber dem nicht in der Stärke reduzierten angrenzenden Bereich der Schaftwandung, lässt sich in einem definierten Schaftbereich die Wulstbildung verhindern, konkret in dem Bereich, in dem das Material des Schaftes reduziert worden ist. Dies ermöglicht es, durch Entnahme von Material des Schaftes an einer Stelle oder zwei Stellen des Schaftes einen bzw. zwei Schaftbereiche zu definieren, in denen kein Wulst beim Setzen des Blindnietelements erzeugt wird. Bei Entnahme von Material im Bereich einer Stelle des Schaftes wird auf einer Seite des Schaftes kein Wulst erzeugt. Sind zwei Bereiche vorgesehen, in denen das Material des Schaftes entnommen ist, insbesondere Bereiche, die auf abgewandten Seiten des Schaftes angeordnet sind, sind in diesen abgewandten Seiten des Schaftes zwei Bereiche ausgebildet, in denen sich kein Wulst bildet.

Diese Gestaltung des Blindnietelements ermöglicht beispielsweise den Einsatz des Blindnietelements, wenn dieses montiert werden soll, nachdem es durch ein Loch in einem Boden eines kanalförmigen Bauelements gesteckt ist, wobei das kanalförmige Bauelement parallel zur Längserstreckung des Schaftes eine Begrenzungswandung aufweist. Das Setzen des Blindnietelements im Bereich der Begrenzungswandung ist deshalb möglich, weil im Bereich der Begrenzungswandung Material des Schaftes entnommen worden ist und sich der Schaft beim Setzen des Blindnietelements nicht bzw. nur unwesentlich in Richtung der Begrenzungswandung verformt. Nur in diesem Bereich der Begrenzungswandung ist kein Wulst gebildet, im verbleibenden Umfangsbereich des Schaftes ist nach dem Setzen des Blindnietelements der Wulst vorhanden. Damit ist das Blindnietelement einerseits fest mit dem dünnwandigen Bauteil, somit im Bereich des Bodens des kanalförmigen Bauelements befestigt, andererseits nahe der Begrenzungswandung positioniert.

Für den Fall, dass das kanalförmige Bauelement sehr schmal ist, somit zwei Begrenzungswandungen in relativ geringem Abstand zueinander angeordnet sind, ist vorgesehen, dass das Blindnietelement auf den abgewandten Seiten den in der Materialstärke reduzierten Schaft aufweist. Auf diesen abgewandten Seiten des Schaftes ist damit das Material entnommen. Hierdurch wird die Wulstbildung auf diesen beiden abgewandten Seiten des Schaftes verhindert. Die Bildung des Wulstes ist insbesondere verhindert, indem der Schaft ein Loch aufweist, dessen Erstreckung, vor dem Setzen des Blindnietelements, in axialer Richtung des Schaftes mindestens der Erstreckung des Verformungsabschnitts in axialer Erstreckung des Schafts nach dem Setzen des Blindnietelements entspricht. Insbesondere hierdurch ist sichergestellt, dass sich kein Wulst in diesem Bereich des Schafts ausbilden kann, weil wegen der Materialentnahme infolge der Ausbildung des Loches kein Material zur Verfügung steht, um zur Ausbildung des Wulstes beizutragen.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand mehrerer Ausführungsformen für unterschiedliche Anwendungen beispielsweise dargestellt, ohne hierauf beschränkt zu sein.

Es zeigt:
- Fig. 1: für ein erstes Ausführungsbeispiel der Erfindung ein als Blindnietmutter ausgebildetes Blindnietelement, veranschaulicht in einer Ansicht (rechte Hälfte) und einem Längsmittelschnitt (linke Hälfte),
- Fig. 2: die Blindnietmutter gemäß Fig. 1 in einer Ansicht und einem Längsmittelschnitt, jedoch gegenüber der Darstellung in Fig. 1 um 90° um deren Längsmittelachse gedreht,
- Fig. 3: in einem Längsmittelschnitt die Anordnung von einem dünnwandigen Gegenstand (Blech) und der Blindnietmutter gemäß der Ausführungsform nach den Fig. 1 und 2, nach dem Setzen der Blindnietmutter,
- Fig. 4: eine Ansicht der Anordnung gemäß Fig. 3, in Richtung des Pfeils IV in Fig. 3 gesehen,
- Fig. 5: die Blindnietmutter gemäß der Ausführungsform nach den Fig. 1 und 2, eingesetzt in einen Schenkel eines L-förmigen Gegenstandes, der einen Hohlraum definiert,
- Fig. 6: die Anordnung gemäß Fig. 5, in Richtung des Pfeils VI in Fig. 5 gesehen,
- Fig. 7 und 8: ein zweites Ausführungsbeispiel des als Blindnietmutter ausgebildeten Blindnietelements, in Ansicht bzw. Darstellungen gemäß der Fig. 1 und 2,
- Fig. 9 und 10: die Anordnung der Blindnietmutter und des dünnwandigen Gegenstands (Bleches) in den Fig. 3 und 4 entsprechenden Darstellungen, wobei die Fig. 10 eine Ansicht X gemäß Fig. 9 ist,
- Fig. 11 und 12: eine Anordnung der Blindnietmutter gemäß der Ausführungsform nach den Fig. 7 und 8 und mit diesem zusammenwirkenden Bauelement in einer den Fig. 5 und 6 entsprechenden Darstellung, wobei das Bauelement einen Boden und zwei parallele Begrenzungswandungen aufweist, sowie die Fig. 12 eine Ansicht XII gemäß Fig. 11 ist,
- Fig. 13 bis 19: diverse Ansichten der gemäß den Fig. 7 und 8 ausgebildeten und gemäß den Fig. 9 und 10 angeordneten Blindnietmutter, einschließlich einer grundsätzlichen Darstellung einer Blindnietmutter zur Verdeutlichung der geometrischen Verhältnisse und Kräfteverhältnisse, teilweise mit Maßangaben,
- Fig. 20: die Blindnietmutter gemäß dem Ausführungsbeispiel nach den Fig. 7 und 8, in einer diesen Figuren entsprechenden Darstellung,
- Fig. 21: die mit einem kompressiblen Material vernietete Blindnietmutter, gemäß Ausführungsform nach Fig. 20,
- Fig. 22: einen Schnitt durch die Anordnung gemäß der Linie XXII in Fig. 21,
- Fig. 23 bis 28: ein grundsätzliches Ausführungsbeispiel des als Blindnietgewindebolzen ausgebildeten Blindnietelements in Darstellungen entsprechend denen des Ausführungsbeispieles gemäß der Fig. 7 bis 12.

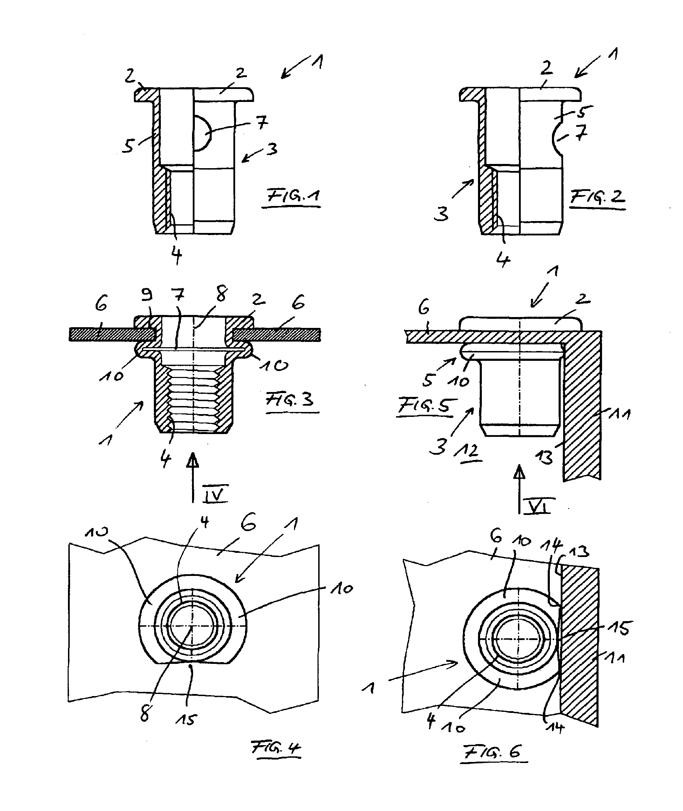

Die Fig. 1 und 2 veranschaulichen für eine erste Ausführungsform der Erfindung die Blindnietmutter 1, bevor sie gesetzt wird. Die Blindnietmutter 1 weist einen Setzkopf 2 und einen Schaft 3 auf. Der Schaft 3 ist im Bereich seines dem Setzkopf abgewandten Endes mit einem Innengewinde 4 und zwischen dem Innengewinde 4 und dem Setzkopf 2 mit einem Verformungsabschnitt 5 versehen. Grundsätzlich reicht dieser Verformungsabschnitt 5 bis zum Setzkopf 2, da sich die Blindnietmutter 1 in diesem Bereich bei Einleitung einer Zugkraft in das Innengewinde 4 verformen könnte. In der Praxis, da die Blindnietmutter mit einem plattenförmigen Bauteil 6, insbesondere einem Blech 6 zu verbinden ist, reicht dieser Verformungsabschnitt 5 vom Bereich des Innengewindes 4 nur bis zu der dem Setzkopf 2 abgewandten Seite des plattenförmigen Bauteils 6.

Der Setzkopf 2 weist einen größeren Außendurchmesser als der Schaft 3 auf. Der Außendurchmesser des Schaftes 3 ist konstant. Auch der Innendurchmesser des Schaftes 3 im Bereich des Verformungsabschnitts 5 ist konstant und entspricht dem Innendurchmesser des Setzkopfes 2. Der Innendurchmesser des Innengewindes 4 ist geringer als der Innendurchmesser des Schaftes 3 im Bereich des Verformungsabschnitts 5. Die vorstehenden Angaben beziehen sich auf den nicht verformten Zustand der Blindnietmutter 1.

Die Blindnietmutter 1 ist im Bereich ihres Verformungsabschnitts 5 mit einem den Schaft 3 durchsetzenden Loch 7 mit kreisförmigem Querschnitt versehen. Beispielsweise beträgt bei der Blindnietmutter 1 der Außendurchmesser des Schaftes 3 neun mm und es beträgt der Durchmesser des Loches 7 vier mm. Die Rotationsachse des Loches 7 schneidet die Mittellängsachse 8 des Verformungsabschnitts 5 des Schaftes 3, bezogen auf die nicht gesetzte Blindnietmutter 1.

Die Blindnietmutter 1 wird mit ihrem Schaft 3 durch einen Kreisquerschnitt aufweisendes Loch 9 im Blech 6 gesteckt. Der Außendurchmesser des Schaftes 3 der Blindnietmutter 1 ist geringfügig geringer als der Durchmesser des Loches 9. Die Blindnietmutter 1 liegt mit ihrem Setzkopf 2 am Blech 6 an. Es wird dann ein nicht gezeigter Gewindedorn im Bereich des Setzkopfes 2 in die Blindnietmutter 1 eingeführt und von dort in das Innengewinde 4 eingeschraubt. Mittels eines Blindnietmutter-Setzgerätes, das den Gewindedorn aufweist und sich am Setzkopf 2 abstützt, wird die Blindnietmutter 1 befestigt, wie es für den gesetzten Zustand der Blindnietmutter 1 in Fig. 3 veranschaulicht ist. Beim Setzen der Blindnietmutter 1 wird über das Innengewinde 4 eine Kraft in die Blindnietmutter 1 bei axial festgelegtem Setzkopf 2 eingeleitet, sodass die Blindnietmutter 1 im Bereich des Verformungsabschnitts 5 verformt wird. Es bildet sich ein Wulst 10 aus, der aber, wie der Darstellung der Fig. 4 zu entnehmen ist, nicht umlaufend ist, sich damit über einen Vollkreis erstreckt, sondern unterbrochen ist. Aufgrund der Entnahme von Material des Schaftes 3 durch Ausbildung des Loches 7 steht in diesem Bereich des Schaftes 3 beim Setzen der Blindnietmutter 1 kein Material bzw. nur sehr wenig Material zur Verfügung, um im Bereich dieses Loches 9, beim Setzen der Blindnietmutter 1, einen Wulst auszubilden. Der Wulst 10 erstreckt sich, bezogen auf dessen radial äußere Kontur, über einen Winkel von etwa 270° bezüglich der Mittellängsachse 8 der Blindnietmutter 1.

Die Seite des Verformungsabschnitts 5, in deren Bereich sich kein Wulst 10 bildet, stellt sich nach dem Setzen des Blindnietelements, wie anschaulich der Darstellung der Fig. 4 zu entnehmen ist, im Wesentlichen als Begrenzungsfläche dar, die senkrecht zum Blech 6 angeordnet ist und tangential zum Schaft 3 im Bereich der dem Innengewinde 4 abgewandten Außenkontur des Schaftes 3 verläuft. Dies ermöglicht es, wie insbesondere der Darstellung der Fig. 5 und 6 zu entnehmen ist, die Blindnietmutter 1 gemäß der Ausführungsform nach den Fig. 1 und 2, an einem Gegenstand zu befestigen, der das plattenförmige Bauteil 6 und eine senkrecht hierzu verlaufende Begrenzungswandung 11 aufweist. Diese Begrenzungswandung 11, das plattenförmige Bauteil 6 und weitere nicht veranschaulichte Bauteile bilden insbesondere einen Hohlraum 12. Die Blindnietmutter 1 ist mit ihrem Schaft 3 durch das Loch 9 in das plattenförmige Bauteil 6 eingesetzt und erstreckt sich mit dem über das Bauteil 6 stehenden Schaft 3 in den Hohlraum. Das Loch 7 ist benachbart zur Innenfläche 13 der Begrenzungswandung 11 angeordnet, in unmittelbarer Nachbarschaft zu dieser. Beim Setzen der Blindnietmutter 1, somit beim Verformen des Verformungsabschnitts 5 gegen das Bauteil 6 nimmt der Bereich 15, der der Begrenzungswandung 11 zugewandt ist, nicht an der Verformung teil, weil aufgrund der Ausbildung des Schaftes 3 mit dem Loch 7 dort nicht ausreichend Material zur Bildung des Wulstes 10 benachbart der Begrenzungswandung 11 vorhanden ist.

Unschädlich ist in diesem Zusammenhang, wenn sich beim Verformen der Blindnietmutter 1 in den Endbereichen des Wulstes 10 geringfügige Vorsprünge 14 ergeben. Im Bereich dieser Vorsprünge 14 kontaktiert die Blindnietmutter 1 die Begrenzungswandung 11 oder es graben sich die Vorsprünge 14 geringfügig in die Begrenzungswandung 11 ein. Das durch die Begrenzungswandung 11 und das blattförmige Bauteil 6 gebildete Bauelement besteht vorzugsweise aus Aluminium oder Kunststoff.

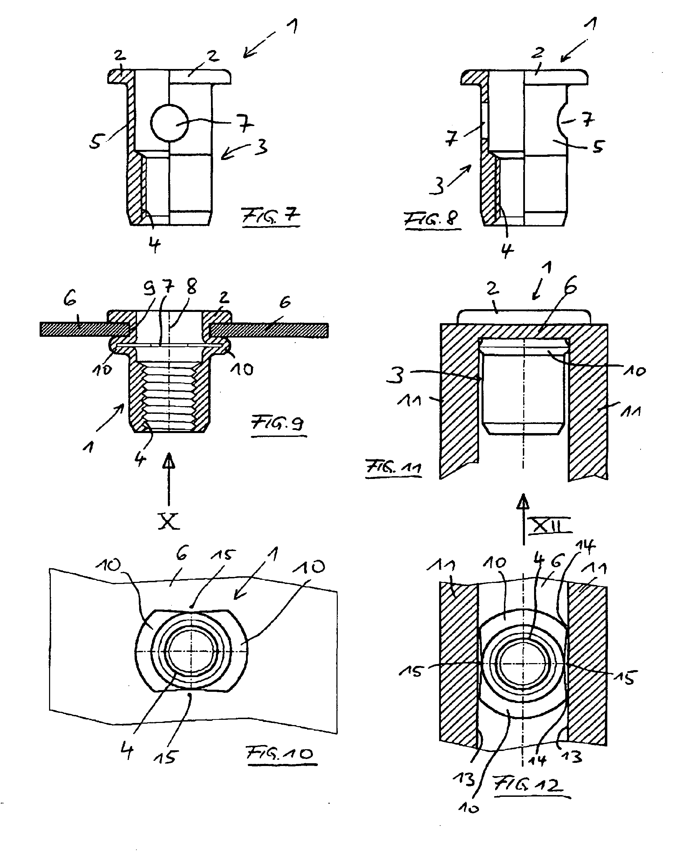

Die Blindnietmutter 1 gemäß der Ausführungsform nach den Fig. 7 und 8 unterscheidet sich von derjenigen nach den Fig. 1 und 2 nur dadurch, dass statt einem Loch 7 zwei Löcher 7 identischer Abmessung und Anordnung vorgegeben sind, die auf abgewandten Seiten des Schafts 3 im Bereich des Verformungsabschnitts 5 angeordnet sind. Die Mittellängsachse der Löcher 7 schneidet somit unter einem rechten Winkel die Mittellängsachse des Verformungsabschnitts 5, bezogen auf die nicht gesetzte Blindnietmutter 1. In der Konsequenz führt dies beim Setzen der Blindnietmutter 1 dazu, dass der Wulst 1 nicht einmal unterbrochen ist, wie bei dem Ausführungsbeispiel gemäß den Fig. 1 bis 6, sondern zweimal unterbrochen ist. Es werden somit zwei auf abgewandten Seiten des Schafts 3 angeordnete Bereiche 15 gebildet und zwischen diesen die Wülste 10. Diese Ausgestaltung der Blindnietmutter 1 mit den beiden Bereichen 15, in denen zur Verhinderung der Wulstbildung das Material im Schaft 3 durch Schaffung der Löcher 7 entnommen ist, ermöglicht die Anbringung der Blindnietmutter 1 an einem kanalförmigen, einen Hohlraum bildenden Bauteil, das durch das plattenförmige Bauteil 6 und zwei parallel zueinander angeordnete und senkrecht zum plattenförmigen Bauteil 6 angeordnete Begrenzungswandungen 11 gebildet ist. Ungeachtet des geringen Abstandes zwischen den beiden Begrenzungswandungen 11, der deutlich geringer ist als der Durchmesser der Blindnietmutter 1 im Bereich des verformten Verformungsabschnitt 5, kann die Blindnietmutter 1 zwischen den beiden Begrenzungswandungen 11 angeordnet und dort gesetzt werden. Die Verformung der Blindnietmutter 1 geschieht hierbei nur in Längserstreckung des zwischen den Begrenzungswandungen 11 gebildeten Kanals.

Zu den Ausführungsbeispielen veranschaulichen die Fig. 1 und 3 bzw. 7 und 9, dass das jeweilige Loch 7 einen solchen Durchmesser aufweist, dessen Erstreckung, vor dem Setzen des Blindnietelements 1, in axialer Richtung des Schafts 3 mindestens der Erstreckung des Verformungsabschnitts 5 in axialer Richtung des Schafts 3 nach dem Setzen des Blindnietelements 1 entspricht.

Statt der Ausbildung des Blindnietelements als Blindnietmutter 1 kann das Blindnietelement durchaus als Blindniet-Gewindebolzen ausgebildet sein. Bei diesem weist der Schaft im Bereich seines dem Setzkopf abgewandten Endes eine Aufnahme für einen Gewindebolzen und zwischen der Aufnahme für den Gewindebolzen und dem Setzkopf den Verformungsabschnitt auf.

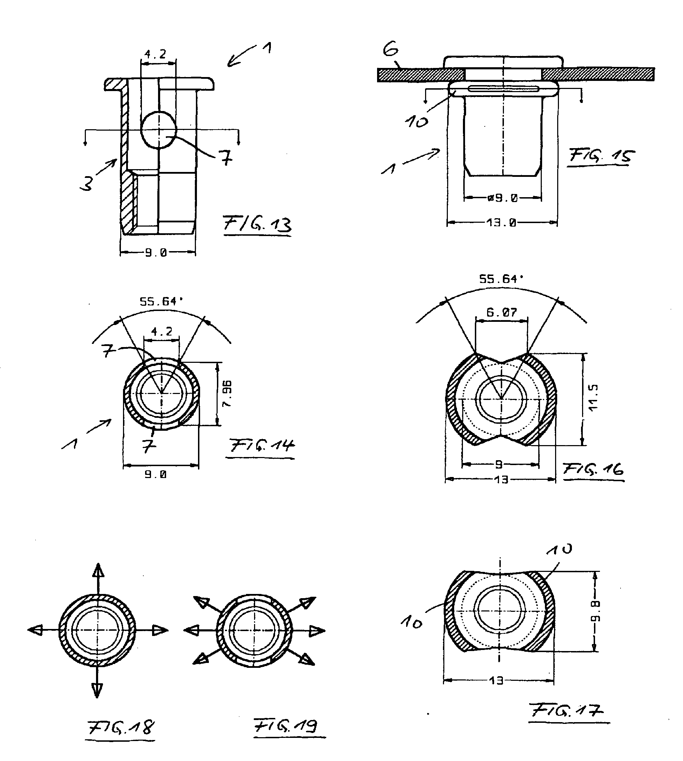

Die Fig. 13 und 14 zeigen eine Blindnietmutter, die gemäß dem Ausführungsbeispiel nach den Fig. 7 und 8 ausgebildet ist. Bei der konkreten Versuchsanordnung weist diese Blindnietmutter 1 zwei gegenüberliegende Löcher 7 auf, die jeweils einen Durchmesser von 4,2 mm besitzen. Der Schaft 3 weist einen Außendurchmesser von 9 mm auf. Dies ergibt sich aus der Fig. 13. Wie der Fig. 14 zu entnehmen ist, ergibt sich aufgrund dieser geometrischen Verhältnisse, betrachtet über den Bogen des Schafts 3 im Bereich des Verformungsabschnitts 5 der nicht verformten Blindnietmutter 1 rechnerisch ein Öffnungsmaß von 4,2 mm und ein Maß des jeweiligen Verformungsabschnitts 5 zwischen den beiden Löchern 7 von 7,96 mm. Der Öffnungswinkel im Bereich des jeweiligen Loches 7 beträgt 55,64°.

Fig. 15 zeigt die in das plattenförmige Bauteil 6 eingenietete Blindnietmutter 1 mit ausgebildetem Wulst 10. In der Praxis ergibt sich hierbei beispielsweise ein Wulstaußendurchmesser von 13 mm, wie in Fig. 15 veranschaulicht. Fig. 16 veranschaulicht eigentlich erwartete Größenverhältnisse im Bereich des Wulstes 10 beim Setzen der Mutter. Es kann erwartet werden, dass beim Setzen der Mutter der Lochöffnungswinkel von 55,64° auch im Bereich des Wulstes 10 erhalten bleibt, so dass sich am Umfang des Wulstes 10 ein Öffnungsmaß des verformten Loches 7 von 6,7 mm ergeben müsste und demnach für den äußeren Bogen des jeweiligen Wulstes 10 sich ein Maß von 11,5 mm ergäbe. In der Praxis ist dieses aber überraschenderweise nicht der Fall, sondern es ergeben sich im Wesentlichen die Verhältnisse, wie sie in Fig. 17 dargestellt sind. So ist der Öffnungswinkel (55,64°) wesentlich vergrößert und es ergibt sich statt des Maßes von 11,5 mm gemäß Fig. 16 ein Maß von nur 9,8 mm gemäß Fig. 17. Demnach sind die beiden Wülste 10 gemäß Fig. 17, die denen gemäß der Fig. 10 entsprechen, im Wesentlichen auf abgewandten Seiten der Blindnietmutter 1 angeordnet.

Die Fig. 18 und 19 können als mögliche Erklärung für die unerwartete Verformung des Wulstes 10 gemäß Fig. 17 dienen:
So veranschaulicht Fig. 18, dass bei einer Blindnietmutter 1, bei der der Schaft 3 keine Löcher 7 aufweist, gleichmäßige Verformungskräfte bei der Wulstbildung über den Umfang des Verformungsabschnitts 5 wirken. Diese Kräfte sind über den Vollkreis dargestellt. Demzufolge ergibt sich beim Verformen einer solchen Blindnietmutter 1 ein exakt gleichmäßig am Umfang umlaufender Wulst. Fig. 19 veranschaulicht, dass bei Ausbildung des Schaftes 3 mit den beiden Löchern 7, wobei durchaus auch nur ein Loch 7 vorgesehen sein kann, die Verformungskräfte wesentlich stärker diametral wirken, und nur geringe Kräfte in Richtung der beiden Löcher 7 wirken können. Dies scheint dazu zu führen, dass sich die Ausbildung des Wulstes 10 bzw. der Wülste 10 gemäß Fig. 17 ergibt.

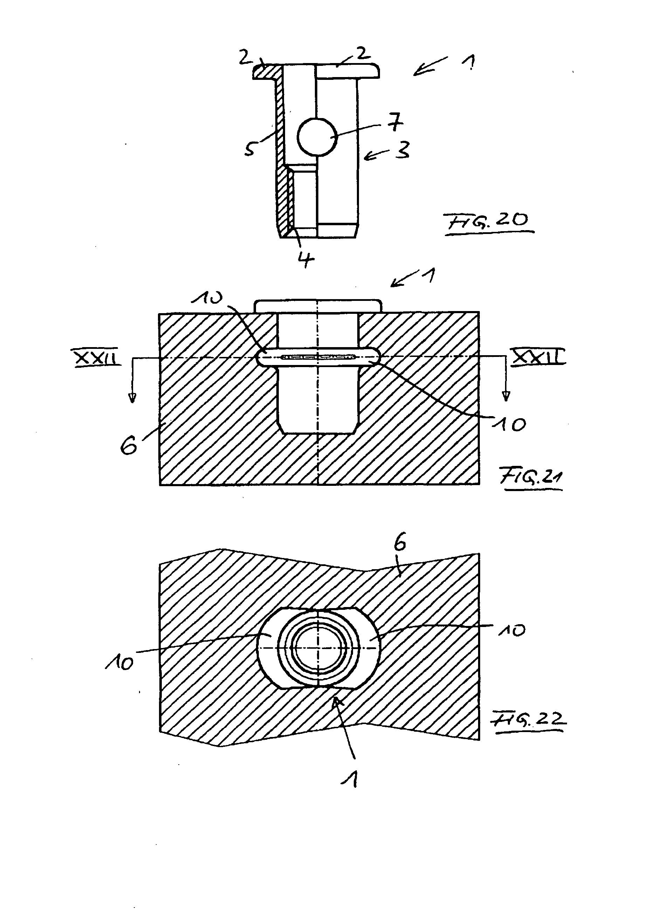

Fig. 20 veranschaulicht die Blindnietmutter 1 gemäß dem Ausführungsbeispiel gemäß der Fig. 7 und 8. Wie der Darstellung der Fig. 21 und 22 zu entnehmen ist, ist diese Blindnietmutter 1 mit einem dickwandigen Bauteil 6 vernietet, dass aus einem kompressiblen Material, z. B. aus Holz, besteht. Da sich der Verformungsabschnitt 5 der Blindnietmutter 1 im Bereich des Bauteils 6 befindet, führt dies beim Setzen der Blindnietmutter 1 dazu, dass sich die beiden gebildeten Wülste 10 in das kompressible Material ausdehnen. Wie der Darstellung der Fig. 22 zu entnehmen ist, ergibt sich durch die Ausbildung der beiden Wulste 10 eine Verdrehsicherung der Blindnietmutter 1. Diese Verdrehsicherung wäre selbstverständlich auch dann gewährleistet, wenn sich nur ein Wulst 10, wie bei dem Ausführungsbeispiel der Blindnietmutter 1 nach der Fig. 1, ausbilden würde.

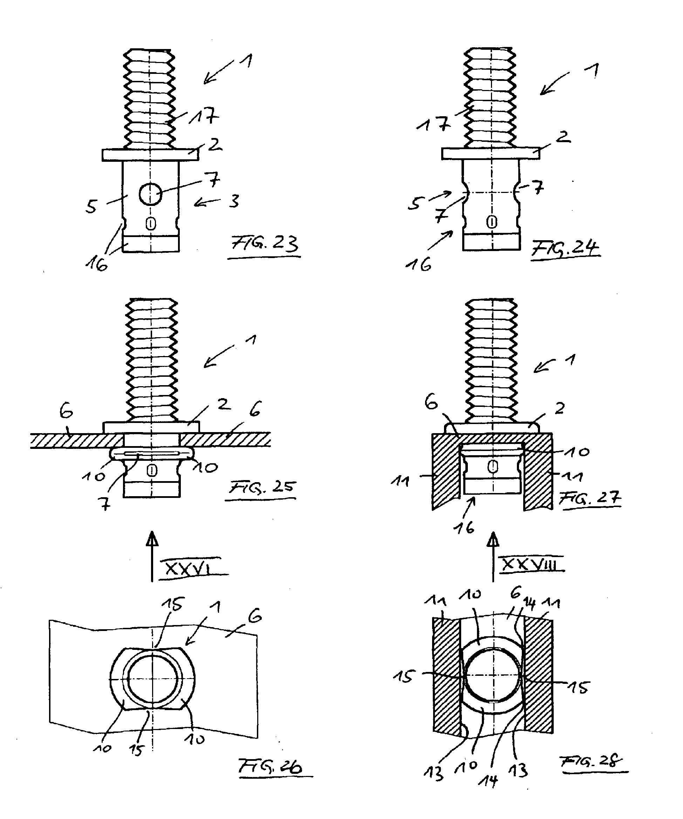

Fig. 23 bis 28 zeigen eine Ausbildung des Blindnietelements als Blindnietgewindebolzen 1 und dessen Anwendung im Zusammenhang mit einem plattenförmigen Bauteil 6, wie in den Fig. 25 und 26 dargestellt bzw. mit einem Bauteil 6 das parallele Begrenzungswandungen 11 aufweist, wie in den Fig. 27 und 28 dargestellt. Mit der Ausführungsform gemäß den Fig. 7 bis 12 übereinstimmende Bauteile sind in den Fig. 23 bis 28 mit denselben Bezugsziffern bezeichnet. Fig. 26 ist eine Ansicht gemäß dem Pfeil XXVI in Fig. 25, Fig. 28 eine Ansicht gemäß dem Pfeil XXVIII in Fig. 27.

Wie der Darstellung des Blindnietelements 1, das als Blindnietgewindebolzen ausgebildet ist, gemäß der Darstellung der Fig. 23 bis 28 zu entnehmen ist, weist der Schaft 3 des Blindnietgewindebolzens, im Bereich seines dem Setzkopf 2 abgewandten Endes, eine Aufnahme 16 für einen Gewindebolzen 17 und zwischen der Aufnahme 16 und dem Setzkopf 2 den Verformungsabschnitt 5 auf. Wegen der weitergehenden Ausführung zu diesem Ausführungsbeispiel gemäß der Fig. 23 bis 28 wird auf die vorstehenden Ausführungen betreffend die Ausführungsform nach den Fig. 7 bis 12 verwiesen.

## Patentansprüche

1. Blindnietelement (1) mit einem Setzkopf (2) und einem Schaft (3), wobei der Schaft (3) im Bereich seines dem Setzkopf (2) abgewandten Endes ein Innengewinde (4) oder eine Aufnahme (16) für einen Gewindebolzen (17) und zwischen dem Innengewinde (4) bzw. der Aufnahme (16) für den Gewindebolzen (17) und dem Setzkopf (2) einen Verformungsabschnitt (5) aufweist, sowie der Setzkopf (2) einen größeren Außendurchmesser als der Schaft (3) aufweist, wobei der Verformungsabschnitt (5), nach dem Verformen des Schafts (3) und hierbei ausgebildetem Schließkopf, einen Wulst (10) aufweist, der sich in Umfangsrichtung des Schafts (3) an dessen Außenseite erstreckt, **dadurch gekennzeichnet, dass** der Schaft (3) derart gestaltet ist, dass in dem Bereich des Verformungsabschnitts (5) des Schafts (3), in dem eine Wulstbildung nicht erfolgen soll, die Bildung des Wulstes (10) durch Entnahme von Material des Schafts (3) verhindert ist, wobei die beiden Enden des Wulstes (10), die an den Bereich des Schafts (3) angrenzen, in dem die Wulstbildung verhindert ist, annähernd tangential zur Außenkontur des Schafts (3) in seinem nicht verformten Bereich angeordnet sind.

2. Blindnietelement nach Anspruch 1, **dadurch gekennzeichnet, dass** die Bildung des Wulstes (10) verhindert ist, indem der Schaft (3) ein Loch (7) aufweist, dessen Erstreckung, vor dem Setzen des Blindnietelements (1), in axialer Richtung des Schafts (3) mindestens der Erstreckung des Verformungsabschnitts (5) in axialer Richtung des Schafts (3), nach dem Setzen des Blindnietelements (1) entspricht.

3. Blindnietelement nach Anspruch 2, **dadurch gekennzeichnet, dass** das Loch (7), vor dem Setzen des Blindnietelements (1), Kreisquerschnitt aufweist.

4. Blindnietelement nach einem der Ansprüche 1 bis 3, **dadurch gekennzeichnet, dass** der Schaft (3), vor dem Setzen des Blindnietelements (1), im Bereich des entnommenen Materials ein den Schaft (3) durchsetzendes Loch (7) aufweist, insbesondere das Kreisquerschnitt aufweisende Loch (7) den Schaft (3) durchsetzt.

5. Blindnietelement nach einem der Ansprüche 1 bis 4, **dadurch gekennzeichnet, dass** aus dem Schaft (3), im Bereich einer einzigen Seite, Material entnommen ist, zur Verhinderung der Bildung des Wulstes (10) auf dieser Seite des Schafts (3).

6. Blindnietelement nach einem der Ansprüche 1 bis 4, **dadurch gekennzeichnet, dass** aus dem Schaft (3) im Bereich zweier abgewandter Seiten Material entnommen ist, zur Verhinderung der Wulstbildung auf diesen beiden Seiten des Schafts (3).

7. Blindnietelement nach Anspruch 6, **dadurch gekennzeichnet, dass**, bezogen auf eine Längsmittelachse (8) des Schafts (3), symmetrisch zu dieser, Material zum Verhindern der Wulstbildung auf den beiden Seiten des Schafts (3) von diesem entnommen wird.

8. Blindnietelement nach Anspruch 6 oder 7, **dadurch gekennzeichnet, dass** nach dem Setzen des Blindnietelements (1) zwei Wülste (10, 10) gebildet sind, zwischen denen die Bereiche (15, 15), die keine Wülste aufweisen, angeordnet sind, wobei die gebildeten Wülste (10, 10) symmetrisch zur Längsmittelachse (8) des Blindnietelements (1) angeordnet sind.

## Claims

1. Blind rivet element (1) having a setting head (2) and a shank (3), wherein the shank (3) has, in the region of its end remote from the setting head (2), an internal thread (4) or a receptacle (16) for a threaded bolt (17) and, between the internal thread (4) or the receptacle (16) for the threaded bolt (17) and the setting head (2), a deformation section (5), and the setting head (2) has a larger outside diameter than the shank (3), wherein, following the deformation of the shank (3) and the resultant formation of a closing head, the deformation section (5) has a bead (10) which extends in the circumferential direction of the shank (3) at the outer side thereof, **characterized in that** the shank (3) is configured such that, in the region of the deformation section (5) of the shank (3), in which bead formation is not intended to occur, the formation of a bead (10) is prevented by removal of material of the shank (3), wherein the two ends of the bead (10), which adjoin the region of the shank (3) in which bead formation is prevented, are arranged approximately tangentially to the external contour of the shank (3) in the non-deformed region thereof.

2. Blind rivet element according to Claim 1, **characterized in that** the formation of the bead (10) is prevented **in that** the shank (3) has a hole (7), the extent of which in the axial direction of the shank (3) prior to the setting of the blind rivet element (1) corresponds at least to the extent of the deformation section (5) in the axial direction of the shank (3) following the setting of the blind rivet element (1).

3. Blind rivet element according to Claim 2, **characterized in that** the hole (7) has a circular cross section prior to the setting of the blind rivet element (1).

4. Blind rivet element according to one of Claims 1 to 3, **characterized in that**, prior to the setting of the blind rivet element (1), the shank (3) has a hole (7) that passes through the shank (3) in the region of the removed material, and in particular the hole (7) having a circular cross section passes through the shank (3).

5. Blind rivet element according to one of Claims 1 to 4, **characterized in that** material has been removed from the shank (3) in the region of a single side in order to prevent the formation of the bead (10) on said side of the shank (3).

6. Blind rivet element according to one of Claims 1 to 4, **characterized in that** material has been removed from the shank (3) in the region of two sides that face away from one another, in order to prevent the bead formation on said two sides of the shank (3).

7. Blind rivet element according to Claim 6, **characterized in that**, with respect to a longitudinal centre axis (8) of the shank (3), and in a symmetrical manner thereto, material is removed from the shank (3) to prevent the bead formation on the two sides thereof.

8. Blind rivet element according to Claim 6 or 7, **characterized in that**, following the setting of the blind rivet element (1), two beads (10, 10), between which the regions (15, 15) which have no beads are arranged, are formed, wherein the beads (10, 10) formed are arranged symmetrically to the longitudinal centre axis (8) of the blind rivet element (1).

## Revendications

1. Elément de rivet aveugle (1) avec une tête de pose (2) et une tige (3), dans lequel la tige (3) présente dans la région de son extrémité opposée à la tête de pose (2) un filet intérieur (4) ou un logement (16) pour un boulon fileté (17) et une partie déformable (5) entre le filet intérieur (4) ou le logement (16) pour un boulon fileté (17) et la tête de pose (2), et la tête de pose (2) présente un plus grand diamètre extérieur que la tige (3), dans lequel la partie déformable (5) présente, après la déformation de la tige (3) et la tête de fermeture ainsi formée, un bourrelet (10), qui s'étend dans la direction périphérique de la tige (3) sur le côté extérieur de celle-ci, **caractérisé en ce que** la tige (3) est configurée de telle manière que, dans la région de la partie déformable (5) de la tige (3), dans laquelle il ne doit pas se former de bourrelet, la formation du bourrelet (10) est empêchée par enlèvement de matière de la tige (3), dans lequel les deux extrémités du bourrelet (10), qui sont adjacentes à la région de la tige (3) dans laquelle la formation du bourrelet est empêchée, sont disposées de façon approximativement tangentielle au contour extérieur de la tige (3) dans sa région non déformée.

2. Elément de rivet aveugle selon la revendication 1, **caractérisé en ce que** la formation du bourrelet (10) est empêchée par le fait que la tige (3) présente un trou (7), dont l'extension, avant la pose de l'élément de rivet aveugle (1), dans la direction axiale de la tige (3) correspond au moins à l'extension de la partie déformable (5) en direction axiale de la tige (3) après la pose de l'élément de rivet aveugle (1).

3. Elément de rivet aveugle selon la revendication 2, **caractérisé en ce que** le trou (7) présente une section transversale circulaire avant la pose de l'élément de rivet aveugle (1).

4. Elément de rivet aveugle selon l'une quelconque des revendications 1 à 3, **caractérisé en ce que** la tige (3) présente dans la région de la matière enlevée, avant la pose de l'élément de rivet aveugle (1), un trou (7) traversant la tige (3), en particulier le trou (7) présentant une section transversale circulaire traverse la tige (3).

5. Elément de rivet aveugle selon l'une quelconque des revendications 1 à 4, **caractérisé en ce que** de la matière est enlevée de la tige (3), dans la région d'un seul côté, pour empêcher la formation du bourrelet (10) sur ce côté de la tige (3).

6. Elément de rivet aveugle selon l'une quelconque des revendications 1 à 4, **caractérisé en ce que** de la matière est enlevée de la tige (3) dans la région de deux côtés opposés, pour empêcher la formation d'un bourrelet sur ces deux côtés de la tige (3).

7. Elément de rivet aveugle selon la revendication 6, **caractérisé en ce que** de la matière est enlevée de la tige (3), de façon symétrique par rapport à un axe central longitudinal (8) de la tige (3), pour empêcher la formation d'un bourrelet sur les deux côtés de la tige (3).

8. Elément de rivet aveugle selon la revendication 6 ou 7, **caractérisé en ce que** deux bourrelets (10, 10) sont formés après la pose de l'élément de rivet aveugle (1), entre lesquels sont disposées les régions (15, 15) qui ne présentent pas de bourrelets, dans lequel les bourrelets formés (10, 10) sont disposés de façon symétrique par rapport à l'axe central longitudinal (8) de l'élément de rivet aveugle (1).
